# EUROPEAN PATENT SPECIFICATION

(11) **EP 3 512 723 B1**
(45) Date of publication and mention of the grant of the patent: **24.03.2021**
(21) Application number: 17790941.3
(22) Date of filing: 12.09.2017
(51) Int. Cl.: B60F 1/04

(54) **RAILWAY TRACTION VEHICLE WITH VARIABLE TRACTION**
SCHIENENTRIEBFAHRZEUG MIT VARIABLER TRAKTION
VÉHICULE DE TRACTION FERROVIAIRE À TRACTION VARIABLE

(30) Priority: 13.09.2016 BE 201605693
(43) Date of publication of application: 24.07.2019
(73) Proprietor: Rentaloc, besloten vennootschap met beperkte aansprakelijkheid, 2500 Lier (BE)
(72) Inventor: KROLS, Dirk, 2820 Bonheiden (BE)
(74) Representative: De Clercq, Krista
(86) International application number: PCT/BE2017/000040
(87) International publication number: WO 2018/049488

(56) References cited:
- WO-A1-2011/129752
- WO-A1-2014/032126
- CN-U- 202 389 130
- DE-A1-102012 110 439
- DE-B- 1 128 456
- GB-A- 2 217 662
- US-A- 3 002 469
- US-A- 3 892 187
- US-A- 4 147 238
- US-A- 4 537 137

## Description

The present invention relates to a railway traction vehicle with variable traction.

More particularly, the invention is intended as a railway traction vehicle for mixed use, meaning a traction vehicle that can move on both railway tracks and on a hardened road surface.

Railway traction vehicles for mixed use have already been known for a long time, whereby the traction is provided by four rubber wheels that make contact with the rails on which they can exert their traction force. These machines with rubber wheels specifically adapted for rail use also have metal rail guidance wheels that can be lowered while pulling railway carriages and raised if the traction vehicle has to be moved to another track on its rubber wheels, however these metal rail guidance wheels exert no traction force on the rails.

It is known that rubber has a greater grip on steel than steel on steel. The traction power is approximately four times higher, so that such a machine has the traction power of a small traditional locomotive with steel rail wheels. Rubber has a coefficient of friction of 0.7 - 0.8 on the polished steel of a rail, while a steel rail wheel only has a coefficient of friction of 0.2 -0.3.

As a rule of thumb the haulable load is approximately a hundred times higher than the empty weight of the traction vehicle, so such a machine weighing 16 ton can haul a weight of 1,600 ton.

A disadvantage of such converted railway traction vehicles is that the transmission of traction on the rails is limited to the four rubber wheels, as in the machines from which they are derived.

Several railway vehicles have been described that use rubber wheels for driving on the road, but also feature railway wheels to drive on a railway track.

WO 2014/03216 A1 describes a railway traction vehicle that is equipped with four rubber wheels and with four steel rail wheels, and all eight (8X8) can exert traction simultaneously on the rails over which a train is hauled. Each of the eight wheels is equipped with an individual hydraulic or electric motor that can be controlled individually. The traction vehicle is equipped with tilting bogies with which the steel rail wheels can be raised or lowered. The tilting bogies also enable ballast bodies to be detached and placed on supports, by lowering the level of the supporting frame. The weight distribution between the rail wheel axle and rubber wheel axle is always constant, and the force of the empty weight is equally distributed between rail wheels and rubber wheels.

WO 2011/129752 A1 describes a railway vehicle with at least four rubber wheels and a railway wheel unit at the forward and rearward ends of the vehicle each comprising at least two railway wheels that can be raised and lowered to allow bearing of the railway wheels against rails during simultaneous bearing of rubber wheels against the rails for driving the vehicle on the railway track whereby the railway wheels guide the vehicle along the rails, and the rubber wheels drive and break the vehicle against the rails. A position regulating device automatically maintains the railway wheels on a predetermined distance from a reference point on the frame of the vehicle.

DE 1128456 B describes a railway vehicle, equipped with swing axes fixed in a feathered way to the frame of the vehicle, whereby each swing axis is provided with a set of two railway wheels and a set of two rubber wheels, connected to each other in a tiltable way around the swing axis, whereby only the railway wheels or the rubber wheels can be tilted to a downward position, to enable the vehicle to be driven on a railway track or on a road. The vehicle features a single bogey, and the railway wheels are not driving/traction wheels.

US 3 002 469 A describes a suspension system for a vehicle that contains a carrier pivotally attached to the vehicle, the carrier bearing a set of railway wheels and a set of rubber wheels. The railway wheels or the rubber wheels can be pivoted downwards to drive on railway tracks or to drive on the road. The system uses a hydraulic system to bear the weight of the vehicle while the weight is transferred from one type of wheels to the other, to prevent a sudden free fall movement of the vehicle. The system features a single bogey and the wheels are not driving/traction wheels.

GB 2 217 662 A describes a vehicle for use on rail tracks or on the road consisting of two frames pivotally mounted one behind the other. The first frame carries a first pair of road wheels with actuating means for raising and lowering the pair mounted on the first frame. The second frame carries a second pair of road wheels with actuating means for raising and lowering them mounted on the second frame. The mounting of rail wheels and road wheels on each frame enables both the rail wheel and road wheel axes to move or oscillate relative to one another and thereby to manoeuvre over uneven track or land to maintain substantially equal wheels loadings on both the rail wheels or road wheels, whichever are supporting the vehicle. The frames feature a single bogey and the wheels are not driving/traction wheels.

US 4 537137 A describes a combination railcar moving vehicle utilizing the weight transfer principle and trailer spotter which has a plurality of steel rail wheels for moving a railcar along a rail, and has a plurality of road wheels for spotting a highway trailer in a switching yard. The combination vehicle is equipped with four rail wheels, two of which are driven, and with four road wheels, two of which are driven, so as to provide two-wheel rail drive and two-wheel road drive, and is further equipped with oscillating means for permitting the remaining free-wheeling road and rail wheels to oscillate up and down to accommodate uneven rail or ground conditions.

US 3 892 187 A describes a rail traction vehicle for moving railway cars that is adapted for transferring weight from a railway car coupled therewith to the traction vehicle. Separate road and rail wheels are provided which selectively and alternatively support the vehicle either wholly on the road wheels or wholly on the rail wheels. A single differential axle is operatively connected in driving relationship with at least one pair of road wheels and with at least two pairs of rail wheels, the respective wheels in each of which pairs of wheels are mounted in opposed relationship to each other on opposite sides of the vehicle. The vehicle has two bogeys, each with a pair of rubber wheels and a pair of railway wheels. The bogeys can be tilted to bring either the rubber wheels or the railway wheels down for transferring traction on the road or on the rails.

DE 10 2012 110439 A1 describes a two-way vehicle for use on a railway track and for use on the road. The vehicle consists of two parts, connected by a rotatable link, whereby each part has at least two axes, one road axis with road wheels and one rail axis with rail wheels. When used on the road, the rail axes can be lifted, and the vehicle is driven by the road wheels of the two linked parts. When used on a railway track, both the road and rail axes are used, but the axial pressure on the rail axes and on the road axes can be actively controlled, whereby the distribution of the weight of a part of the vehicle between its road axis and its rail axis can be manually controlled, but lacks a real time dynamic control by an electronic control unit.

CN 202 389 130 U describes an adjusting system of a road-rail car with rubber wheels and rail track wheels, featuring adjusting hydraulic cylinders, levelness sensors, pressure sensors, control valves to drive the hydraulic cylinders that control the track wheels, and a controller that keeps the track wheels aligned with the tracks to ensure a dynamic stability to guide the vehicle along the tracks and to maintain the optimum driving tractive force.

US 4 147 238 A describes a rail traction vehicle adapted to travel on rail wheels or on road wheels featuring a spring and shock absorber system while in a rail travel mode, a hydraulic system which enables the differential axles to be optionally spring supported to the frame or in a rigid fixed relationship therewith; a differential axle suspension system for the spring supported axle; a shock absorbing coupler; a self-adjusting rail wheel brake system; and a rail driving station cab with a single set of controls to enable the operator to drive the vehicle in a rail travel mode. The rail wheels of the vehicle are spring mounted to the frame of the vehicle when the vehicle is in a road travel mode.

EP 2892781 discloses a railway traction vehicle fitted with four rubber wheels and four steel rail wheels, with all eight (8 x 8) exerting traction on the rails over which a train is hauled.

The empty weight of the 8 x 8 railway traction vehicle can weigh 30 tons and more, and consequently haul a train with a weight of 3,000 tons.

An advantage of such an 8 X 8 traction vehicle is that the rubber wheels are loaded less during hauling, because the steel rail wheels also bear the empty weight of the traction vehicle and exert traction force on the rails.

Each of the eight wheels of such an 8 X 8 traction vehicle is driven by an individual motor, which can be hydraulic or electric, with the driving power able to be individually controlled.

The 8 X 8 vehicle is always provided with a passive rail guidance system consisting of the four steel rail wheels that are pushed down on the track by the force exerted by the empty weight of the railway traction vehicle itself.

The raising and lowering of the steel rail wheels is effected by the pneumatic, hydraulic or electric tilting of the two bogies that each have a rubber wheel axle with two rubber wheels and a rail wheel axle with two steel rail wheels, each pivoting around a swing axle fixed to the supporting framework of the 8 x 8 vehicle. In the raised position the steel rail wheels no longer make contact with the rails, and the traction vehicle can be driven sideways on its rubber wheels that can be turned over an angle to 270 ° or less from the track and moved by road to another track.

The two tiltable bogies each have a central swing axle, around which the rail wheel axle and the rubber wheel axle of each bogie can rotate in concert to raise or lower the steel rail wheels from or onto the rails.

This swing axle is positioned symmetrically between the rail wheel axle and the rubber wheel axle. With lowered rail wheels the empty weight of the 8 X 8 vehicle is then symmetrically distributed over the rail wheel axle and the rubber wheel axle of each bogie. This arrangement ensures stable passive rail guidance, guaranteed by the weight of the whole vehicle without requiring additional active rail guidance, which may be lost with a failure of the drive means.

A disadvantage of this symmetrically arranged swing axle, is that the weight distribution between the rail wheel axle and rubber wheel axle is always constant, and the force of the empty weight is equally distributed between rail wheels and rubber wheels, while the traction of rubber wheels on the rails is approximately four times greater than the traction of steel rail wheels of a similar diameter.

The purpose of the present invention is to provide a solution to the aforementioned and other disadvantages, by providing a railway traction vehicle according to claim 1.

The weight ratio transferred for the rubber wheel axle ensures that this is a traction vehicle on the track. If the weight ratio is transferred for the rail wheel axle, the vehicle can also be used as a rail working tool and it provides good rail holding, all the more after the addition of means such as a crane, dumper, etc.

Raising the rail wheel axle until the rail wheels are no longer on the rails has the consequence that the empty weight of the vehicle resting on the bogie is no longer shared over the rail wheel axle and the rubber wheel axle, but is now only borne by the rubber wheel axle so this is subjected to higher downward forces.

The four steel rail wheels can be lined with a traction-increasing covering material such as a synthetic material or rubber, or a composition that has good grip on metal, to prevent slipping with a lack of grip on the rails.

Preferably, the upward force on the bogie on the side of the rail wheel axle is exerted by two hydraulically extendable cylinders mounted with one fixed end on the supporting framework of the vehicle and with the other moving end mounted on the end of the bogie that is closest to the rail wheel axle.

Alternatively, a downward force can be exerted on the bogie on the side of the rubber wheel axle by, for example, two hydraulically extendable cylinders, mounted with one end fixed on the supporting framework of the vehicle and with the other moving end mounted on the end of the bogie that is closest to the rubber wheel axle, or on the rubber wheel axle itself (not shown).

According to the invention, the ratio of the downward force on the rubber wheel axle and on the rail wheel axle can be dynamically controlled by an electronic control unit depending on the expected traction force needed while hauling a train or during a hauling start or stop phase.

In this way, the downward force on the rubber wheel axle can be greatly increased with the starting of the train when the need for traction is high, and can be decreased again as soon as the train has reached the desired speed, whereby rail holding must also remain assured by exerting sufficient force on the rail wheel axle.

According to the invention, the traction for each of the eight wheels is separately controlled by an electronic control unit that independently determines the traction force of each wheel and matches it with the dynamic control of the ratio of the downward force on the rubber wheel axle and on the rail wheel axle of each bogie.

In this way, for example, it is possible to drive the traction vehicle only on the rail wheel axle or only on the rubber wheel axle if the vehicle for example is used as a rail working tool for maintenance or repairs.

With the intention of better showing the characteristics of the invention, preferred embodiments of a railway traction vehicle according to the invention are described hereinafter by way of examples, without any limiting nature, with reference to the accompanying drawings, wherein::
figure 1 schematically shows a perspective view of an 8 X 8 railway traction vehicle according to prior art;
figure 2 shows a side view of figure 1 with raised rail wheels;
figure 3 shows a side view on a larger scale of a bogie from figure 2 indicated by F3;
figure 4 schematically shows a perspective view of an 8 X 8 railway traction vehicle according to the invention;
figure 5 shows a side view with partial cut-out of a bogie with asymmetrical swing axle according to the invention;
figure 6 shows figure 5 but with lowered rail wheels;
figure 7 shows a rear view of a bogie according to the invention with raised rail wheels;
figure 8 shows figure 7 but with lowered rail wheels;

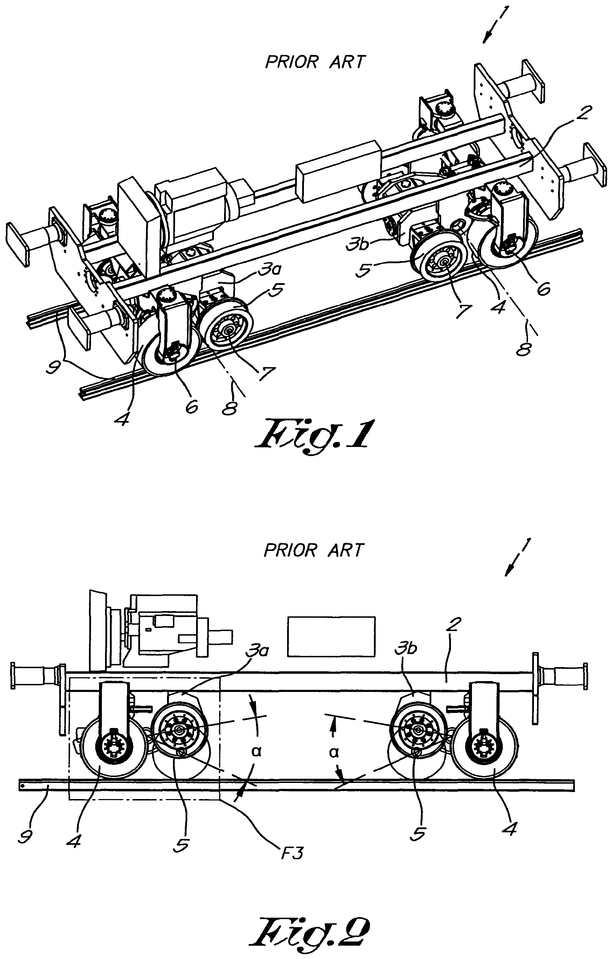

Figure 1 shows a perspective view of a railway traction vehicle 1 according to prior art, consisting of a supporting framework 2, on which two tiltable bogies 3a and 3b are mounted that bear eight individually driven traction wheels consisting of four rubber wheels 4 and four steel rail wheels 5 whereby the axles of the wheels are fixed to the two tiltable bogies 3a and 3b, that each bear a rubber wheel axle 6 with two rubber wheels 4 and a rail wheel axle 7 with two steel rail wheels 5, each pivoting around a swing axle 8 fixed to the supporting framework 2.

Figure 2 shows a side view of figure 1, but with raised bogies 3a, 3b so the steel rail wheels 5 no longer make contact with the underlying rails 9. The rubber wheels 4 are forced downwards such that the supporting framework 2 is raised to a higher level with respect to the rails 9.

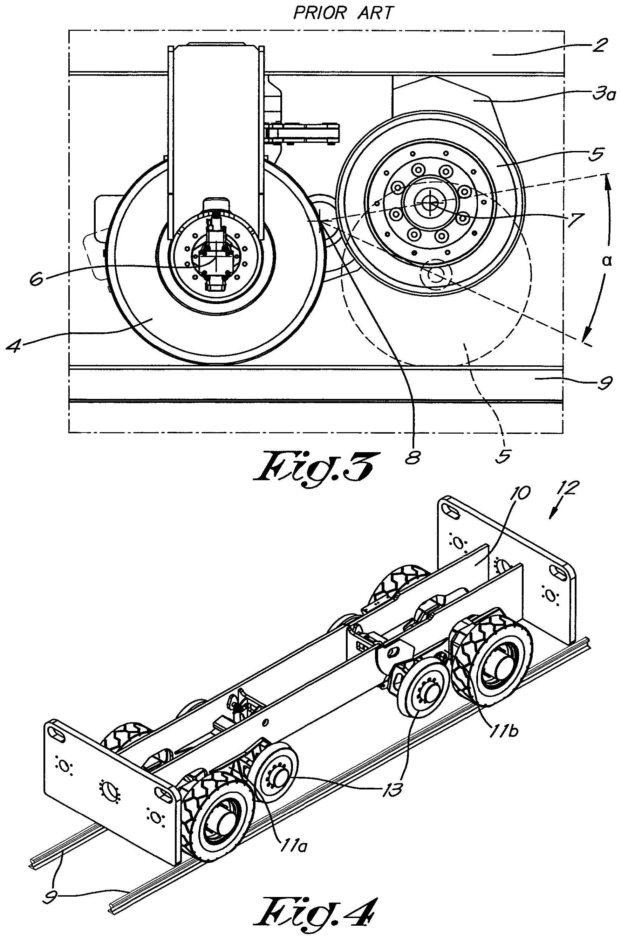

Figure 3 shows a more detailed side view of one bogie 3a, indicated by F3 in figure 2, on which the symmetrical position of the swing axle 8 of the bogie 3a between rubber wheel axle 6 and rail wheel axle 7 is clearly visible.

Figure 4 shows a perspective view of the supporting framework 10 with bogies 11a, 11b of a railway traction vehicle 12 according to the invention, whereby the rail wheels 13 in both bogies 11a, 11b are raised and no longer make contact with the rails 9.

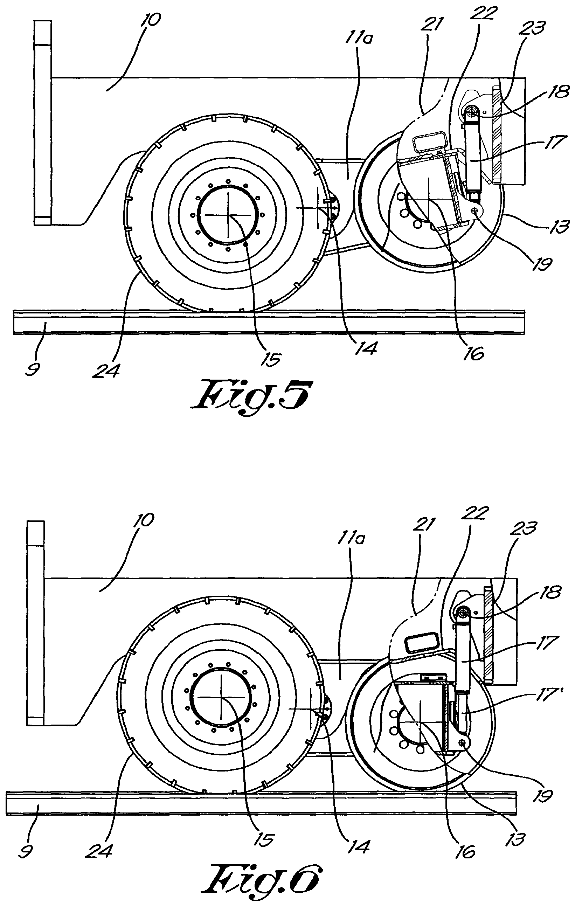

Figure 5 shows a side view and with partial cut-out of a bogie 11a with asymmetrical swing axle 14 according to the invention, on which the asymmetrical position of the swing axle 14 on the connecting line between the rubber wheel axle 15 and rail wheel axle 16 is clearly shown. The swing axle 14 is now positioned closer to the rubber wheel axle 15 than the rail wheel axle 16, that in this case is raised so the rail wheels 13 are no longer in contact with the rails 9.

The bogie 11a is raised by a hydraulically extendable cylinder 17 that is fixed with one fixed end 18 to the supporting framework 10 and with the other and moving end 19 to the end 20 of the bogie 11a that is closest to the rail wheel axle 16. The cut-out 21 shows the opening 22 from the bottom side of the support beam 23 of the supporting framework 10, in which the tilted bogie 11a can fit in the fully raised position.

Figure 6 shows figure 5, but with lowered rail wheels 13 on the rails 9. The bogie 11a is lowered by extending a hydraulically extendable cylinder 17 that allows the bogie 11a to tilt around its swing axle 14, due to which now both the rubber wheels 24 and the rail wheels 13 make contact with the rails 9. The cut-out 21 shows how the fixed end 18 of the extendable cylinder 17 is fixed to the inside of the support beam 23 of the supporting framework 10 and how the extendable part 17 of the extendable cylinder 17 has brought the bogie 11a into a horizontal position whereby the rail wheels 13 make contact with the rails 9.

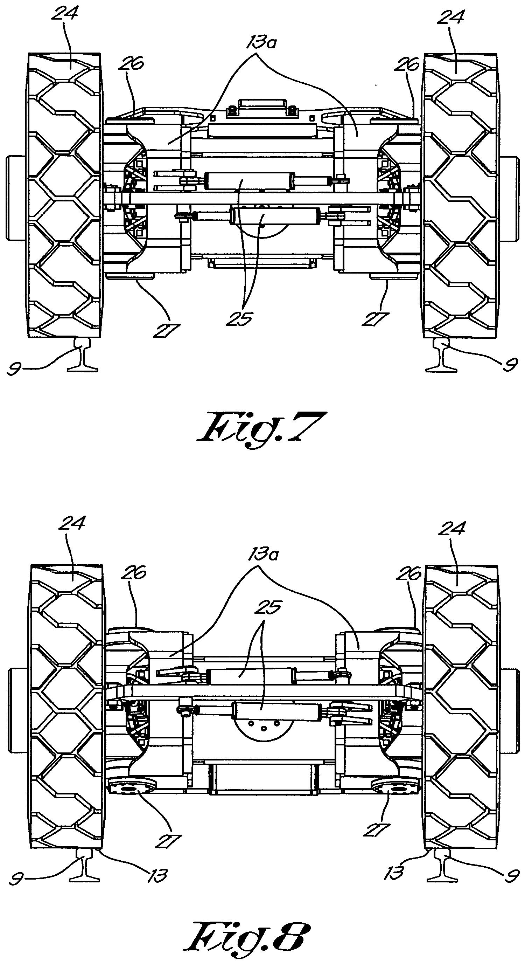

Figure 7 shows a rear view of a bogie 3a with raised rail wheels 13, whereby the body of the bogie 13a is in the horizontal position. The horizontally positioned hydraulic cylinders 25 for control of the rubber wheels 24 are visible. The upper 26 and lower section 27 of the bogie 3a are both horizontal.

Figure 8 shows figure 7, but with lowered rail wheels 13, whereby the body of the bogie 13a is positioned slightly downward in the direction of the lowered rail wheels 13. The upper 26 and lower section 27 of the bogie 3a remain parallel to each other, but are no longer horizontal and both slope slightly at the same angle to the side of the rail wheels 13.

The operation of the railway traction vehicle 12 according to the invention can be explained as follows.

The traction vehicle 12 is stored with tilted bogies 3a, 3b and thus with raised steel rail wheels 13 and standing on the four rubber wheels 24. The traction vehicle is driven on its rubber wheels 24, which are rotatable, to the place on the track where the traction vehicle 12 is required to move a train consisting of one or more carriages and this by means of the individual drive means available on each of the four rubber wheels 24.

The traction vehicle 12 is placed in front of the railway carriage to be hauled, with its rubber wheels 24 on the rails 9, so the metal rail wheels 13 are aligned with the rails 9 below. The metal rail wheels 13 are now lowered by tilting both bogies 3a, 3b by means of a hydraulic, electrical or pneumatic system until the metal rail wheels 13 make contact with the rails 9.

The steel rail wheels 13 are not actively forced down on the rails by an additional downward force, but by the force exerted by the empty weight of the railway traction vehicle 12 itself and as a result form a passive rail guidance system.

This passive rail guidance system is much more reliable than active rail guidance as used in traditional railway traction vehicles, whereby active force control is exerted on the metal rail wheels 13 for rail guidance on the rails 9 but without exerting traction on the rails 9e.

Indeed, with the loss of the active force, the traction vehicle can derail, which does not happen with the passive rail guidance system because the empty weight always continues to exert a sufficiently high force due to gravitation. Then the traction vehicle 12 is coupled to the train consisting of carriages to be hauled.

The traction vehicle 12 is now moved by an electronic control unit that increases the driving force of the individual motors mounted on each of the eight wheels 13, 24 until they exert traction on the rails 9 and the whole train starts moving. Depending on the required traction force, the electronic control unit will hereby also dynamically control the ratio between the downward force on the rubber wheel axle 15 and the downward force on the rail wheel axle 16 to obtain optimum utilisation of the difference in traction force between a rubber wheel 24 and a steel rail wheel 13.

The electronic control unit will hereby optimally utilise the drive means of each wheel 24, 13 and the force distribution over rubber wheel axle 15 and rail wheel axle 16 to start the train moving, and as soon as this movement has started, will dynamically adjust the drive means of each wheel and the abovementioned force distribution according to the hauling route and at the required speed, while ensuring that with the steel rail wheels 13 the rail guidance always has sufficient downward force to prevent derailment.

The electronic control unit used can be a PLC provided with CAN-BUS communication or any other similar system. A traditional pneumatic system with compressed air is used to brake the train, with which each carriage of the train able to be braked, while the traction vehicle itself is hydrostatically and/or traditionally braked.

After the train has been brought to the required position, the traction vehicle 12 is uncoupled and the bogies 3a, 3b are raised, such that the steel rail wheels 13 no longer make contact with the rails 9. The rubber wheels 24 can now be turned in the direction in which the traction vehicle 1 must be driven off the rails, whereby the traction vehicle 12 is only borne by its four rubber wheels 24.

The traction vehicle 1 now is a vehicle that can be moved by road to another location where the presence of the traction vehicle is needed and the whole cycle of use can be repeated.

Obviously control of the traction vehicle can be automated to a certain extent.

The electronic control of the driving force of each motor in each wheel and of the force distribution over rubber wheel axle 15 and rail wheel axle 16 can also be automated to a certain extent, whereby the electronic control unit automatically identifies the phases in a hauling route and adapts control to the phase and the speed of the train at any time.

Obviously the railway traction vehicle must also be equipped with the legally imposed provisions for use on the track. Accordingly, use in certain environments requires that the traction vehicle emits no combustion gases, whereby an electrically powered embodiment is preferred.

The present invention is by no means limited to the embodiments as described as an example and shown in the drawings, but a railway traction vehicle for mixed use with eight traction wheels, provided with two bogies with asymmetrical swing axle according to the invention can be realized in all kinds of variants and dimensions, without departing from the scope of the invention, as described in the following claims.

## Claims

1. Railway traction vehicle (12) with eight traction wheels (24,13), provided with two bogies (11a, 11b) each with a rubber wheel axle (15) with two rubber wheels (24) and a rail wheel axle (16) with two steel rail wheels (13) each bogie pivoting around a swing axle (14) fixed to a supporting framework (10), whereby the swing axle (14) is positioned asymmetrically on the connecting line between the rail wheel axle (16) and the rubber wheel axle (15) and whereby the ratio between the downward force on the rail wheel axle (16) and the rubber wheel axle (15) is actively controlled by increasing the downward force on the rubber wheel axle (15) and by decreasing the downward force on the rail wheel axle (16) or vice versa, whereby each bogie (11a, 11b) can be tilted around its swing axle (14) by exerting an upward hydraulic, pneumatic or electric force on the bogie (11a, 11b) on the side of the rail wheel axle (16), or by exerting an upward hydraulic, pneumatic or electric force on the bogie (11a, 11b) on the side of the rubber wheel axle (15) or on the rubber wheel axle (15) itself, **characterised in that** the ratio of the downward force on the rubber wheel axle (15) and on the rail wheel axle (16) is dynamically controlled by an electronic control unit depending on the expected traction force needed while hauling a train or during a hauling start or stop phase and **in that** the traction for each of the eight wheels (24, 13) is separately controlled by an electronic control unit that independently determines the traction force of each wheel and matches it with the dynamic control of the ratio of the downward force on the rubber wheel axle (15) and on the rail wheel axle (16) of each bogie.

2. Railway traction vehicle (12) according to claim 1, **characterised in that** an upward force is exerted on the bogie (11a, 11b) on the side of the rail wheel axle by two hydraulically extendable cylinders (17) mounted with one fixed end (18) on the supporting framework (10) of the vehicle, and with the other moving end (19) mounted on the end of the bogie (11a, 11b) that is closest to the rail wheel axle (16) .

3. Railway traction vehicle (12) according to claim 1, **characterised in that** an upward force is exerted on the bogie (11a, 11b) on the side of the rubber wheel axle (15) by two hydraulically extendable cylinders mounted with one fixed end on the supporting framework (10) of the vehicle, and with the other moving end mounted on the end of the bogie (11a, 11b) that is closest to the rubber wheel axle (15) or on the rubber wheel axle (15) itself.

4. Railway traction vehicle (12) according to claim 1, **characterised in that** the four steel rail wheels (13) are lined with a traction-increasing covering.

5. Railway traction vehicle according to claim 4, **characterised in that** the traction-increasing covering mainly consists of a synthetic material or rubber.

6. Railway traction vehicle (12) according to claim 1, **characterised in that** the traction vehicle is itself hydrostatically and/or traditionally braked.

## Patentansprüche

1. Schienentriebfahrzeug (12) mit acht Treibrädern (24, 13), versehen mit zwei Drehgestellen (11a, 11b) mit je einer Gummiradachse (15) mit zwei Gummirädern (24) und einer Schienenradachse (16) mit zwei Stahlschienenrädern (13), wobei sich jedes Drehgestell um eine an einem Tragrahmen (10) befestigte Pendelachse (14) dreht, wobei die Pendelachse (14) asymmetrisch auf der Verbindungslinie zwischen der Schienenradachse (16) und der Gummiradachse (15) positioniert ist und wobei das Verhältnis zwischen der Abwärtskraft auf die Schienenradachse (16) und die Gummiradachse (15) durch Ansteigen der nach unten gerichteten Kraft auf die Gummiradachse (15) und durch Abnehmen der nach unten gerichteten Kraft auf die Schienenradachse (16) oder umgekehrt aktiv gesteuert wird, wobei jedes Drehgestell (11a, 11b) um seine Pendelachse (14) gekippt werden kann, indem eine nach oben gerichtete hydraulische, pneumatische oder elektrische Kraft auf das Drehgestell (11a, 11b) auf der Seite der Schienenradachse (16) ausgeübt wird oder eine nach oben gerichteten hydraulischen, pneumatischen oder elektrischen Kraft auf das Drehgestell (11a, 11b) auf der Seite der Gummiradachse (15) oder auf die Gummiradachse (15) selbst ausgeübt wird, **dadurch gekennzeichnet, dass** das Verhältnis der nach unten gerichteten Kraft auf die Gummiradachse (15) und auf die Schienenradachse (16) durch eine elektronische Steuerung dynamisch gesteuert wird, abhängig von der erwarteten Zugkraft, die während des Ziehens eines Zuges oder während einer Ziehstart- oder - stoppphase benötigt wird, und dass die Zugkraft für jedes der acht Räder (24, 13) separat durch eine elektronische Steuerung gesteuert wird, die unabhängig voneinander die Zugkraft jedes Rades bestimmt und sie mit der dynamischen Steuerung des Verhältnisses der nach unten gerichteten Kraft auf der Gummiradachse (15) und auf der Schienenradachse (16) jedes Drehgestells abstimmt.

2. Schienentriebfahrzeug (12) nach Anspruch 1, **dadurch gekennzeichnet, dass** auf das Drehgestell (11a, 11b) auf der Seite der Schienenradachse eine nach oben gerichtete Kraft durch zwei hydraulisch ausfahrbare Zylinder (17) ausgeübt wird, die mit einem festen Ende (18) am Tragrahmen (10) des Fahrzeugs montiert sind und mit dem anderen beweglichen Ende (19) an dem Ende des Drehgestells (11a, 11b) montiert sind, das der Schienenradachse (16) am nächsten liegt.

3. Schienentriebfahrzeug (12) nach Anspruch 1, **dadurch gekennzeichnet, dass** auf das Drehgestell (11a, 11b) auf der Seite der Gummiradachse (15) eine nach oben gerichtete Kraft durch zwei hydraulisch ausfahrbare Zylinder ausgeübt wird, die mit einem festen Ende am Tragrahmen (10) des Fahrzeugs und mit dem anderen beweglichen Ende an dem der Gummiradachse (15) am nächsten liegenden Ende des Drehgestells (11a, 11b) oder an der Gummiradachse (15) selbst montiert sind.

4. Schienentriebfahrzeug (12) nach Anspruch 1, **dadurch gekennzeichnet, dass** die vier Stahlschienenräder (13) mit einem traktionssteigernden Belag beschichtet sind.

5. Schienentriebfahrzeug nach Anspruch 4, **dadurch gekennzeichnet, dass** der traktionssteigernde Belag überwiegend aus einem Kunststoff oder Gummi besteht.

6. Schienentriebfahrzeug (12) nach Anspruch 1, **dadurch gekennzeichnet, dass** das Triebfahrzeug selbst hydrostatisch und/oder herkömmlich gebremst ist.

## Revendications

1. Véhicule ferroviaire de traction (12) qui comprend huit roues motrices (24, 13) équipées de deux bogies (11a, 11b) chacun comprenant un essieu de roues en caoutchouc (15) muni de deux roues en caoutchouc (24) et un essieu de roues ferroviaires (16) muni de deux roues ferroviaires en acier (13), chaque bogie pivotant autour d'un essieu d'oscillation (14) fixé à un bâti de support (10), dans lequel l'essieu d'oscillation (14) est disposé en position asymétrique sur la ligne de liaison entre l'essieu de roues ferroviaires (16) et l'essieu de roues en caoutchouc (15) et dans lequel le rapport entre la force descendante qui s'exerce sur l'essieu de roues ferroviaires (16) et sur l'essieu de roues en caoutchouc (15) est réglé de manière active par l'augmentation de la force descendante qui s'exerce sur l'essieu de roues en caoutchouc (15) et en diminuant la force descendante qui s'exerce sur l'essieu de roues ferroviaires (16) ou vice versa, dans lequel chaque bogie (11a, 11b) peut faire l'objet d'un basculement autour de son essieu d'oscillation (14) en exerçant une force hydraulique, pneumatique ou électrique ascendante sur le bogie (11a, 11b) sur le côté de l'essieu de roues ferroviaires (16) ou en exerçant une force hydraulique, pneumatique ou électrique ascendante sur le bogie (11a, 11b) sur le côté de l'essieu de roues en caoutchouc (15) ou sur l'essieu de roues en caoutchouc (15) lui-même, **caractérisé en ce que** le rapport des forces descendantes qui s'exercent sur l'essieu de roues en caoutchouc (15) et sur l'essieu de roues ferroviaires (16) est réglé de manière dynamique à l'intervention d'une unité de commande électronique en fonction de la force de traction escomptée requise au cours de la traction d'un train ou au cours d'une phase de démarrage ou d'arrêt de la traction et **en ce que** la traction pour chacune des huit roues (24, 13) est commandée de manière séparée par une unité de commande électronique qui détermine de manière indépendante la force de traction de chaque roue et qui l'adapte au réglage dynamique du rapport des forces descendantes qui s'exercent sur l'essieu de roues en caoutchouc (15) et sur l'essieu de roues ferroviaires (16) de chaque bogie.

2. Véhicule ferroviaire de traction (12) selon la revendication 1, **caractérisé en ce qu'**une force ascendante s'exerce sur le bogie (11a, 11b) sur le côté de l'essieu de roues ferroviaires par l'intermédiaire de deux cylindres (17) qui peuvent s'étendre par voie hydraulique, montés, avec une extrémité fixe (18) sur le bâti de support (10) du véhicule, et montés, avec l'autre extrémité mobile (19), sur l'extrémité du bogie (11a, 11b) qui est la plus proche de l'essieu de roues ferroviaires (16).

3. Véhicule ferroviaire de traction (12) selon la revendication 1, **caractérisé en ce qu'**une force ascendante s'exerce sur le bogie (11a, 11b) sur le côté de l'essieu de roues en caoutchouc (15) par l'intermédiaire de deux cylindres qui peuvent s'étendre par voie hydraulique, montés, avec une extrémité fixe sur le bâti de support (10) du véhicule, et montés, avec l'autre extrémité mobile, sur l'extrémité du bogie (11a, 11b) qui est la plus proche de l'essieu de roues en caoutchouc (15) ou sur l'essieu de roues en caoutchouc (15) lui-même.

4. Véhicule ferroviaire de traction (12) selon la revendication 1, **caractérisé en ce que** les quatre roues ferroviaires en acier (13) sont recouvertes d'un revêtement qui augmente la traction.

5. Véhicule ferroviaire de traction (12) selon la revendication 4, **caractérisé en ce que** le revêtement qui augmente la traction est constitué principalement d'une matière synthétique ou de caoutchouc.

6. Véhicule ferroviaire de traction (12) selon la revendication 1, **caractérisé en ce que** le véhicule de traction est, quant à lui, équipé d'un frein hydrostatique et/ou traditionnel.
